# EUROPEAN PATENT APPLICATION

(11) **EP 4 578 845 A1**
(43) Date of publication of application: **02.07.2025**
(21) Application number: 23461703.3
(22) Date of filing: 29.12.2023
(51) Int. Cl.: C05D 3/02

(54) **MINERAL-LIME FERTILIZER AND A METHOD FOR ITS PRODUCTION**

(71) Applicant: WKG Sp. z o.o., 98-355 Raciszyn (PL)
(72) Inventor: SKUTA, Ireneusz, 25-357 Kielce (PL); SOJA, Barbara, 42-218 Czestochowa (PL)
(74) Representative: Kancelaria Eupatent.pl Sp. z.o.o

(57) **Abstract**

A mineral-lime fertilizer having a grain size of less than 2 mm, characterized in that it comprises activated kaolinite and limestone aggregate in a mass ratio ranging from 1:9 to 1:6, wherein the activated kaolinite is in the form of clay grains with bound calcium ions.

## Description

### TECHNICAL FIELD

The invention relates to a mineral-lime fertilizer and a method for its production. The fertilizer is intended for use, in particular, in agricultural production.

### BACKGROUND

The agricultural industry has long sought to improve crop yields and soil health through the application of fertilizers. These substances are essential for providing plants with the nutrients they need to grow, which are often lacking in the soil. Traditional fertilizers have been formulated to supply a variety of nutrients, including nitrogen (N), phosphorus (P), potassium (K), and other micronutrients essential for plant growth.

One of the challenges in fertilizer application is the potential for nutrient runoff, which can occur when excess nutrients are not absorbed by plants and instead leach into water bodies. This runoff can have detrimental environmental effects, such as the eutrophication of lakes, rivers, and coastal areas. Eutrophication can lead to the overgrowth of algae, which can deplete oxygen levels in the water and harm aquatic life.

To address these environmental concerns, the development of fertilizers that minimize nutrient runoff has become a priority. Controlled-release fertilizers and slow-release fertilizers have been developed to provide a more sustained nutrient supply, reducing the risk of leaching and runoff. However, these solutions can be costly and may still not fully address the issue of nutrient loss, especially in sandy soils or during heavy rainfall events.

Soil acidity is another significant issue affecting agricultural productivity. Acidic soils can limit the availability of essential nutrients to plants and can be toxic to certain crops. Lime has traditionally been used to neutralize soil acidity, but its application requires careful management to avoid over-liming, which can lead to soil alkalinity and its own set of problems for crop growth.

Furthermore, the physical properties of soil, such as its structure and water-holding capacity, are critical for plant growth and the efficient use of water resources. Soil that can retain water effectively is particularly important in regions prone to drought or where water conservation is a priority. Improving soil structure can also enhance root penetration and the soil's ability to hold onto nutrients, reducing the need for frequent fertilization.

The agricultural industry also faces the challenge of managing the large quantities of by-products and waste materials generated from various processes, including the mining and processing of minerals. Finding environmentally friendly and economically viable uses for these by-products is an ongoing concern.

In light of these challenges, there is a continuous need for innovative fertilizer formulations and production methods that can improve nutrient use efficiency, reduce environmental impact, and enhance soil properties while also utilizing by-products from industrial processes. The development of such solutions is crucial for sustainable agricultural practices and environmental conservation.

### SUMMARY OF THE INVENTION

The present invention provides a fertilizer based on limestone and activated kaolinite for agricultural use to inhibit the leaching of active nutrient elements (particularly nitrogen, phosphorus, and potassium) with surface and groundwater.

The invention pertains to a mineral-lime fertilizer with a grain size of less than 2 mm, comprising activated kaolinite and lime aggregate in a mass ratio ranging from 1:9 to 1:6. The activated kaolinite is in the form of clay grains with bound calcium ions.

The inclusion of activated kaolinite in the fertilizer improves the soil's physical and physicochemical properties, including its structure, sorption, and water-holding capacity. This improvement is important in the context of climate change, including increasingly frequent drought periods in lowland areas, among others. The flocculant-activated kaolinite binds nitrogen and phosphorus ions in the soil through hydrogen bonds created in the activation process and then gradually releases them. The fertilizer reduces the unfavorable leaching of nitrogen and phosphorus compounds into groundwater, contributing to the eutrophication of river and sea waters, particularly in the Baltic Sea.

Activated kaolinite is derived from the processing of excavated material during the refinement of lime feed, preferably from the Raciszyn deposit. The clay component is a by-product of washing the mineral (activated kaolinite), and the carbonate component is obtained from crushing limestone.

The fertilizer according to the invention increases the phytoavailability of nitrogen and phosphorus compounds to crops while maintaining the primary role of fertilizer lime, which is to deacidify and regulate soil water management.

Furthermore, the invention encompasses a method for producing mineral-lime fertilizer, involving the following steps: obtaining a clay fraction after refining the lime surplus; subjecting the clay fraction to sedimentation in a settling tank with active flocculants to bind at least part of the calcium ions, followed by dewatering on a hydraulic press to obtain a formed mass; drying the formed mass of the clay fraction under atmospheric conditions to achieve a granulated form with a moisture content below 18%; mixing the activated kaolinite in agglomerated form with limestone aggregate in a mass ratio from 1:9 to 1:6 and subjecting them to homogenization; crushing the homogenized mixture to obtain material with a grain size of 0-5 mm, followed by sieving to obtain a fertilizer fraction with a grain size of 0-2 mm.

Preferably, the method involves use of polyacrylamide in a biodegradable form as the active flocculants.

The drying process should be carried out until the material is uniformly moist. The product formed during the dewatering process (kaolinite) can be transported, stored, and subjected to drying under atmospheric conditions until it reaches a granulated form. During the drying process, it is important to conduct mixing and spreading of the kaolinite to achieve uniform moisture content.

Crushing is preferably carried out using a mobile impact crusher. Screening is also preferably carried out on a mobile screening machine, allowing for the production of fertilizer directly at the raw material storage site.

The impact crusher is particularly suitable due to its ability to process raw material with a high content of clay materials without blockage of the conveying and crushing systems. The crusher crushes the fed material by means of dynamic forces created by the rotation of the rotor. The material hitting the impact plates is ejected by them onto the upper and lower thrust jackets and then back onto the impact plates. This process is repeated until the material reaches a size that allows it to pass through the gap between the rotor and the buffer shell. The crusher can be equipped with a recycling belt that directs the oversize material on the pre-screening screen back into the crusher's loading hopper chamber.

The screening machine can be equipped with string screens with a mesh of up to 2 mm. It is advisable for the screening machine to be equipped with a cleaning system. Various known cleaning systems adapted to the characteristics of the raw material can be used.

The process is preferably carried out in a continuous method by directly feeding the crushed material from the impact crusher to the screen. The 2-5 mm fraction, constituting the oversize after the screening process, can be directed back to the crusher.

Preferably, the method is characterized by the use of a sifter for the screening process. To obtain a fertilizer fraction of 0-2 mm, it is necessary to use a sifter that allows for the required granulation.

### EXAMPLE EMBODIMENT

A clay fraction was extracted after the process of refining the limestone feed of minerals from the Raciszyn deposit. The extracted clay fraction was subjected to sedimentation in a sedimentation tank with active flocculants in the form of cationic activators to bind at least part of the calcium ions in the clay fraction. Polyacrylamide in a biodegradable form was used as the active flocculant, in the amount of 1,5 g per 1 ton of separated clay fraction. The processed clay facies were fed to a hydraulic press with pressure 200 bar to dehydrate it to a moisture content below 25% to obtain a formed mass. The so-formed mass was dried under atmospheric conditions to a moisture content below 18%, obtaining a granulated form of activated kaolinite. The activated kaolinite thus obtained was mixed with limestone aggregate in a mass ratio of 1:7 and subjected to homogenization using typical mixers. The resulting raw material was subjected to crushing with a mobile impact crusher to obtain material with a grain size of 0-5 mm, which was then sieved on a mobile screening machine with string screens of less than 2 mm mesh. The crushing and screening process was carried out in a continuous method, obtaining a fertilizer fraction with a grain size of 0-2 mm. The fertilizer thus obtained was characterized by the following contents: (taking into account measurement inaccuracies): CaCOs - at least 90,5%; MgCOs - average 1,1%; Al₂O₃ - average 0,9%; SiO₂ - average 3,6%; Fe₂O₃ - average 1,2%. About 42% of the grains were of size lower than 0,5mm, the rest was between 0,5 and 2,0 mm. The pH of the fertilizer was 9,3.

## Claims

1. A mineral-lime fertilizer having a grain size of less than 2 mm, **characterized in that** it comprises activated kaolinite and limestone aggregate in a mass ratio ranging from 1:9 to 1:6, wherein the activated kaolinite is in the form of clay grains with bound calcium ions.

2. The fertilizer according to claim 1, wherein the activated kaolinite is obtained by processing excavated material during the refinement of lime feed, by subjecting it to a sedimentation process with active flocculants.

3. A method for producing a mineral-lime fertilizer, **characterized in that** it comprises the steps of:
- obtaining a clay fraction from the process of refining lime feed;
- subjecting the obtained clay fraction to sedimentation in a settling tank with active flocculants to bind at least part of the calcium ions in the clay fraction, and subsequently dehydrating it on a hydraulic press to obtain a formed mass;
- drying the formed mass of the clay fraction under atmospheric conditions to obtain a granulated form with a moisture content below 18%;
- mixing the activated kaolinite in granulated form with limestone aggregate in a mass ratio from 1:9 to 1:6 and homogenizing the mixture;
- crushing the homogenized mixture to obtain a material with a grain size of 0-5 mm; and
- screening the crushed mixture to obtain a fertilizer with a grain size of 0-2 mm.

4. The method according to claim 3, **characterized by** using polyacrylamide in a biodegradable form as the active flocculants.
